# EUROPEAN PATENT APPLICATION

(11) **EP 4 711 094 A1**
(43) Date of publication of application: **18.03.2026**
(21) Application number: 25193063.2
(22) Date of filing: 31.07.2025
(51) Int. Cl.: B25J 9/16, B21J 15/28, G01L 5/00

(54) **SYSTEM AND METHOD FOR CORRELATING FORCES EXERTED BY DIFFERENT TOOLS**

(30) Priority: 17.09.2024 US 202418887134
(71) Applicant: The Boeing Company, Arlington, VA 22202 (US)
(72) Inventor: Reasoner, Nicholas Chin, Arlington, VA, 22202 (US); Brockway, Monica Joy, Arlington, VA, 22202 (US); Sisco, Farahnaz, Arlington, VA, 22202 (US); Essad, Sean Francis, Arlington, VA, 22202 (US); Forero, Santiago Mejia, Arlington, VA, 22202 (US); Schamhart, Liam Herman, Arlington, VA, 22202 (US); Roylance, Dylan, Arlington, VA, 22202 (US)
(74) Representative: Hoffmann Eitle

(57) **Abstract**

A system and a method include a component formed of a material. The component has one or more first holes. A test piece is formed of the material. The test piece has one or more second holes. A first tool is configured to insert one or more first fasteners into one or both of the first hole(s) or the second hole(s). A second tool is configured to insert one or more second fasteners into one or both of the first hole(s) or the second hole(s). One or more force sensors are coupled to one or both of the component or the test piece. The force sensor(s) are configured to detect (a) one or more first aspects of one or more first forces exerted during operation of the first tool to insert the first fastener(s) into one or both of the first hole(s) or the second hole(s), and (b) one or more second aspects of one or more second forces exerted during operation of the second tool to insert the second fastener(s) into one or both the first hole(s) or the second hole(s). A control unit is in communication with the force sensor(s), and is configured to correlate the first aspect(s) of the first force(s) with the second aspect(s) of the second force(s).

## Description

### FIELD OF THE DISCLOSURE

Examples of the present disclosure generally relate to systems and methods for correlating insertion forces exerted by a first tool, such as a rivet gun, with insertion forces exerted by a second, different tool, such as a hydraulic press.

### BACKGROUND OF THE DISCLOSURE

Various components are secured together through fasteners inserted into holes by a rivet gun. For example, a rivet gun is operated to secure one or more fasteners (such a bolts, rivets, or the like) into holes formed in panels to secure the panels together. As an example, the panels can form part of an outer skin, frame, stringer, or the like of a fuselage of an aircraft. The forces exerted by the rivet gun can affect the components or fasteners. For example, if the rivet gun exerts excessive force into the fastener or the component(s), such structures can be degraded. Therefore, before components are secured together within a manufacturing facility, a press (such as a hydraulic press) is used to perform tests on representative samples of the component(s) and fasteners so that manufacturers know the limits of forces to be exerted by the rivet gun.

However, the forces exerted by a press may not be the same as those exerted by a rivet gun.

### SUMMARY OF THE DISCLOSURE

A need exists for a system and a method for correlating forces exerted by a press with forces exerted by a rivet gun. With that need in mind, certain examples of the present disclosure provide a system including a component formed of a material. The component has one or more first holes. A test piece is also formed of the material. The test piece has one or more second holes. A first tool is configured to insert one or more first fasteners into one or both of the one or more first holes or the one or more second holes. A second tool is configured to insert one or more second fasteners into one or both of the one or more first holes or the one or more second holes. One or more force sensors are coupled to one or both of the component or the test piece. The one or more force sensors are configured to detect (a) one or more first aspects of one or more first forces exerted during operation of the first tool to insert the one or more first fasteners into one or both of the one or more first holes or the one or more second holes, and (b) one or more second aspects of one or more second forces exerted during operation of the second tool to insert the one or more second fasteners into one or both of the one or more first holes or the one or more second holes. A control unit is in communication with the one or more force sensors. The control unit is configured to correlate the one or more first aspects of the one or more first forces with the one or more second aspects of the one or more second forces.

**In** at least one example, the first tool is a different type than the second tool. For example, the first tool is a rivet gun, and the second tool is a press.

**In** at least one example, the first tool and the second tool are configured to operate in relation to the test piece. **In** at least one example, the first tool is configured to operate in relation to the component, and the second tool is configured to operate in relation to the test piece. The first tool and the component can be at a first location, and the second tool and the test piece can be at a second location that differs from the first location.

**In** at least one example, the one or more force sensors include one or more first sensors coupled to the component, and one or more second sensors coupled to the test piece.

**In** at least one example, a user interface is in communication with the control unit. The user interface includes a display. The control unit is configured to show information regarding the one or more first aspects of the one or more first forces and the one or more second aspects of the one or more second forces on the display.

In at least one example, the control unit is configured to correlate the one or more first aspects of the one or more first forces with the one or more second aspects of the one or more second forces by using a predictive model. As an example, the predictive model is based on a diameter of the one or more first fasteners or the one or more second fasteners, a length of the one or more first fasteners or the one or more second fasteners, a length and a diameter of the one or more first holes or the one or more second holes, and the material.

Certain examples of the present disclosure provide a method including inserting, by the first tool, one or more first fasteners into one or both of the one or more first holes or the one or more second holes; inserting, by the second tool, one or more second fasteners into one or both of the one or more first holes or the one or more second holes; detecting, by the one or more force sensors, (a) one or more first aspects of one or more first forces exerted during operation of the first tool to insert the one or more first fasteners into one or both of the one or more first holes or the one or more second holes, and (b) one or more second aspects of one or more second forces exerted during operation of the second tool to insert the one or more second fasteners into one or both of the one or more first holes or the one or more second holes; and correlating, by the control unit, the one or more first aspects of the one or more first forces with the one or more second aspects of the one or more second forces.

### BRIEF DESCRIPTION OF THE DRAWINGS

Figure 1 illustrates a schematic block diagram of a system, according to an example of the present disclosure.
Figure 2 illustrates a flow chart of a method, according to an example of the present disclosure.
Figure 3 illustrates a perspective top view of a force sensor, according to an example of the present disclosure.
Figure 4 illustrates an isometric top view of a component on a support platform, according to an example of the present disclosure.
Figure 5 illustrates a side of the component on the support platform.
Figure 6 illustrates a side view of a rivet gun, according to an example of the present disclosure.
Figure 7 illustrates a schematic block diagram of a control unit, according to an example of the present disclosure.
Figure 8 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

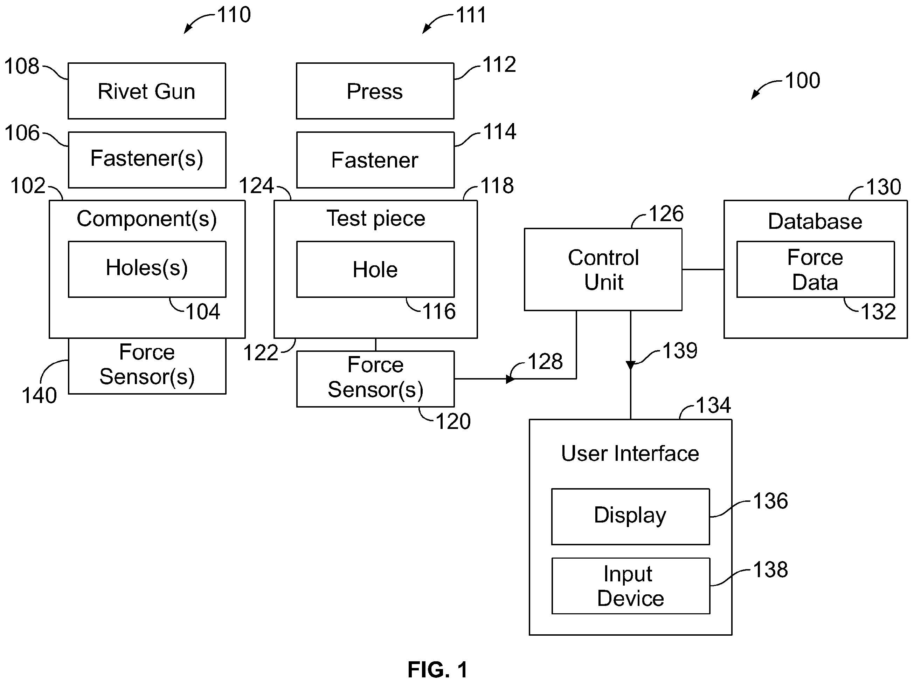

Figure 1 illustrates a schematic block diagram of a system 100, according to an example of the present disclosure. The system 100 includes one or more component(s) 102 including one or more hole(s) 104 configured to receive one or more fastener(s) 106. The components 102 can be panels, blocks, columns, beams, and/or the like. For example, the components 102 can be portions of a fuselage (such as outer skin, frames, stringers, or the like) of a vehicle, such as an aircraft. The fasteners 106 can be bolts, rivets, nails, or the like. A first tool, such as a rivet gun 108, is operated to exert force into the fastener 106 to insert the fastener 106 into the hole 104 to secure the component 102 to another component, for example. The rivet gun 108 is operated in relation to the component(s) 102 and the fastener(s) 106 at a first location 110, such as a manufacturing facility (for example, a factory).

In order to determine various aspects of forces exerted by the rivet gun 108, a second tool, such as a press 112 (such as a hydraulic press, which can be a push-in type press), is located at a second location 111, such as a test facility. The second location 111 can be separate and distinct from the first location. As another example, the first location 110 and the second location 111 can be different areas at a common location. The press 112 is operated to insert a fastener 114 into a hole 116 of a test piece 118, such as a test coupon. The test piece 118 is a smaller sample of the component(s) 102. The test piece 118 and the component(s) 102 are formed of the same material, and have the same properties. For example, the component(s) 102 and the test piece 118 have the same thickness, and are formed of the same material (such as aluminum, copper, steel, or the like). Optionally, instead of a test piece 118, another component 102 can be used. As another option, the rivet gun 108 can operate in relation to the test piece 118, and the press 112 can be operated in relation to the component(s) 102.

One or more force sensors 120 (such as load cells) are coupled to one or both of the test piece 118 and/or the fastener 114. For example, the force sensor(s) 120 can be located above the press 112. In at least one example, the force sensor(s) 120 can be directly coupled to the test piece 118. As a further example, the force sensor(s) 120 are coupled to a first surface 122 (for example, a bottom surface) of the test piece 118. The first surface 122 is opposite from a second surface 124 (for example, a top surface) on which the press 112 exerts force into the fastener 114 to insert the fastener 114 into the hole 116. Optionally, the force sensor(s) 120 are coupled to the second surface 124. In at least one example, one or more force sensors 120 are coupled to the first surface 122, and one or more additional force sensors 120 are coupled to the second surface 124. The force sensor(s) 120 are configured to detect one or more aspects of forces exerted by the press 112 into the fastener 114 and/or the test piece 118 as the press 112 operates to insert the fastener 114 into the hole 116 of the test piece 118.

In at least one example, one or more test pieces 118 can be used at the location 111 to determine aspects of forces exerted by the rivet gun 108 and the press 112. For example, the rivet gun 108 and the press 112 can be at the location 111, and operate to insert one or more fasteners 114 into one or more holes 116 of one or more test pieces 118 (instead of data being received in relation to components 102 at a different location). As described herein, sensors are used to acquire data regarding the aspects of the forces exerted during operation of the rivet gun 108 and the press 112.

A control unit 126 is in communication with the force sensor(s) 120, such as through one or more wired or wireless connections. The force sensor(s) 120 output signals 128 indicative of the detected aspects of the force(s) to the control unit 126. The control unit 126 receives the signal 128 from the force sensor(s) 120.

In at least one example, the control unit 126 is also in communication with a database 130, such as through one or more wired or wireless connections. The database 130 stores force data 132. In at least one example, the force data 132 includes information regarding one or more aspects of force(s) exerted by the rivet gun 108 into the fastener(s) 106 and the component(s) 102. As a further example, the force data 132 also includes information regarding one or more aspects of force(s) exerted by the press 112 into the fastener 114 and the test piece 118.

In operation, the control unit 126 receives the signals 128 from the force sensor(s) 120 and determines the aspect(s) of the force(s) exerted by the press 112 into the fastener 114 and the test piece 118. The control unit 126 correlates the aspect(s) of the force(s) exerted by the press 112 into the fastener 114 and the test piece 118 with the aspect(s) of the force(s) exerted by the rivet gun 108 into the fastener(s) 106 and the component(s) 102, such as can be stored as force data 132 within the database 130. In at least one example, the control unit 126 determines the correlations from stored force data 132 within the database 130. In doing so, the control unit 126 allows an individual to determine how forces exerted by the press 112 into the fastener 114 and the test piece 118 relate to forces exerted by the rivet gun 108 into the fastener(s) 106 and the component(s) 102. As such, the press 112 can be operated to exert force(s) into the fastener 114 and the test piece 118 below a limit that could otherwise adversely affect the fastener 114 and/or the test piece 118. The force(s) are correlated to those exerted by the rivet gun 108 into the fastener(s) 106 and the component(s) 102 at the location 110 to ensure that the rivet gun 108 is not operated in a manner that could otherwise adversely affect the fastener(s) 106 and/or the component(s) 102.

In at least one example, the control unit 126 is further in communication with a user interface 134, which includes a display 136 in communication with an input device 138. The display 136 can be a monitor, screen, television, touchscreen, and/or the like. The input device 138 can include a keyboard, mouse, stylus, touchscreen interface (that is, the input device 138 can be integral with the display 136), and/or the like. The user interface 134 can be part of a handheld device (such as a smart phone or smart tablet), a portable computer, a computer workstation, and/or the like. In at least one example, the control unit 126 and the user interface 134 are part of a common computing device.

In operation, the control unit 126 outputs signals 139 to the user interface 134. The signals 139 include information regarding a correlation of operation of the press 112 with operation of the rivet gun 108. For example, the information indicates that the press 112 operating to insert the fastener 114 into the hole 116 of the test piece 118 correlates with the rivet gun 108 operating to insert the fastener 106 into the hole 104 of the component 102. In this manner, the display 136 can show information to a user indicating the limits at which the rivet gun 108 is to be operated in order to ensure that the fastener(s) 106 and the component(s) 102 are not adversely affected during operation of the rivet gun 108.

As noted, the first tool can be the rivet gun 108 and the second tool can be the press 112. Optionally, the first tool can be the press 112, and the second tool can be the rivet gun 108. The first tool and the second tool are different types of tools (not simply different ones or versions of the same type of tool). As another example, the first tool can be a hammer, and the second tool can be a pneumatic press, or vice versa. As another example, the first tool can be a jackhammer or pile driver, and the second tool can be a press (such as hydraulic press or pneumatic press).

Optionally, both the rivet gun 108 and the press 112 can operate at different times on the test piece 118 at the location 111. The force sensors 120 acquire data regarding aspects of forces exerted by the rivet gun 108 and the press 112 in relation to fasteners 114 and the test piece 118. The control unit 126 can receive the data and correlate the data related to the rivet gun 108 and the press 112.

As described herein, examples of the present disclosure provide the system 100 and a method for correlating insertion forces required to install the fastener(s) 106 into the hole(s) 104 (such as transition or interference holes) using the rivet gun 108 with insertion forces required to install the fastener 114 into the hole 116 (such as a transition or an interference hole) of the test piece 118 using the press 112 (such as a hydraulic press). In at least one example, one or more force sensors 140 (such as load cells) are coupled to the component(s) 102 to collect data regarding aspects of forces exerted by the rivet gun 108 into the fastener(s) 106 and the component(s) 102 during operation of the rivet gun 108. The force sensor(s) 140 can be directly coupled to one or more of the components 102, as described in relation to the force sensors 120. The data is stored in the database 130 as the force data 132. The data can be collected from manual riveting processes using the rivet gun 108 via the force sensor(s) 140, which collect information regarding various aspects of forces exerted by the rivet gun 108. The various aspects of the forces includes number of impacts, average impact force, peak force, and the like.

In at least one example, the control unit 126 uses a predictive model, which can be stored to memory, having linear relationships to determine the forces on the fastener(s) 106 and the components 102. In at least one example, the control unit 126 correlates forces to allow for an analysis of damage or risk to parts. The predictive model can be based on diameter, length, and material of the fastener(s) 106, length and diameters or hole(s) 104, material of the component(s) 102 and the test piece 118, and/or the like. The control unit 126 then outputs (based on the correlations determined from operation of the press 112 during test procedures in relation to the fastener 114 and the test piece 118, and which can also be stored in the database 130) information, such as values for interference, interference rating, peak force from push-in, number of hits from rivet gun, average impact force, and maximum impact force. The control unit 126 can show such information on the display 136 of the user interface 134, which can be analyzed to assess risks for damage to either the fastener(s) 106 and/or the component(s) 102, and inform decisions made during a design phase of an assembly, structure, or the like that includes the component(s) 102 and the fastener(s) 106. In at least one further example, the control unit 126 can assess risks for damage to either the fastener(s) 106 and/or the component(s) 102.

Examples of the present disclosure provide the system 100 and a method for correlating insertion forces required to install a fastener into an interference hole using a rivet gun 108 or a press 112. The control unit 126 receives data from the force sensor(s) 140 including a number of hits by the rivet gun 108 on the fastener 106, and then such data can be used as inputs to determine interference level, and stack thickness to output rivet gun number of hits required to insert the fastener 106 into the hole 104 of the component 102. The stack can be formed of various materials, such as a composite and aluminum, aluminum and titanium, composite and titanium, composite and composite, aluminum and aluminum, or the like. The force sensor(s) 140 and the force sensor(s) 120 are used to calibrate and generate data to build a model that correlates operation of the press 112 with operation of the rivet gun 108, such as via linear regression.

The system 100 and the method described herein correlate two fastener insertion methods: a push-in method using the press 112, and a rivet gun method using the rivet gun 108. The control unit 126 receives data from the force sensor(s) 140 related to the rivet gun 108, and data from the force sensor(s) 120 related to the press 112. Based on the data received from the force sensor(s) 140 and the data received from the force sensor(s) 120, the control unit 126 determines a correlation model, which is then used to predict the forces experienced by the test piece 118 during insertion of the fastener 114 by the press 112. The push-in method (of the press 112) is used during research and development, while the rivet gun method (of the rivet gun 108) is used at the location 110, such as a manufacturing facility. The correlation between the two methods, as determined by the control unit 126, is useful in understanding forces to be expected at the location 110.

Force readings for various interference fits were measured using the force sensors 120 and the force sensors 140. Such data is stored in the database 130 as the force data 132. Using the data, the control unit 126 constructs a predictive model, which uses linear relationships between forces based on inputs (material, interference, thickness, diameter, and the like) to approximate forces of other interference levels, material types, diameters, thicknesses, and the like.

As described herein, in at least one example, the system 100 includes the component 102 formed of a material. The component 102 has one or more first holes 104. The test piece 118 is formed of the material. The test piece 118 has one or more second holes 116. A first tool, such as the rivet gun 108, is configured to insert one or more first fasteners 106 or 114 into first hole(s) 104 and/or the second hole(s) 116. A second tool, such as the press 112, is configured to insert one or more second fasteners 106 or 114 into the first hole(s) 104 and/or the second hole(s) 116. One or more force sensors 120 or 140 are coupled to the component 102 and/or the test piece 118. The force sensors 120 and/or 140 are configured to detect (a) one or more first aspects of one or more first forces exerted during operation of the rivet gun 108 to insert the first fastener(s) 106 or 114 into the one or more first hole(s) 104 or the second hole(s) 116, and (b) one or more second aspects of one or more second forces exerted during operation of the press 112 to insert the second fastener(s) 106 or 114 into the first hole(s) 104 or the one or more second hole(s) 116/ The control unit 126 is in communication with the force sensor(s) 120 and/or 140. The control unit 126 is configured to correlate the first aspect(s) of the first force(s) with the second aspect(s) of the second force(s).

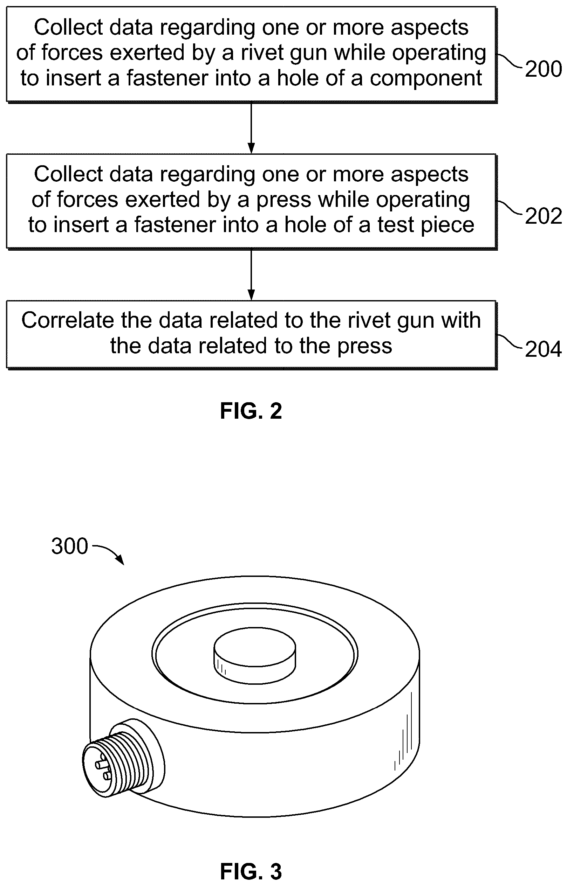

Figure 2 illustrates a flow chart of a method, according to an example of the present disclosure. Referring to Figures 1 and 2, values can be input, such as via a user interface. The values relate to changing variable, such as material type, thickness, diameter, interference, and the like. At 200, data regarding one or more aspects of forces exerted by the rivet gun 108 while operating to insert a fastener 106 into a hole 104 of a component 102 is collected. For example, the data can be output by the force sensor(s) 140, received by the control unit 126, and stored in the database 130 as force data 132. At 202, data regarding one or more aspects of forces exerted by the press 112 while operating to insert a fastener 114 into a hole 116 of a test piece 118 is collected. For example, the data can be output by the force sensor(s) 120, received by the control unit 126, and stored in the database 130 as force data 132. At 204, the control unit 126 correlates the data related to the rivet gun 108 with the data related to the press 112.

Both the push-in method and the rivet gun method utilize interference fits, meaning the hole and fastener diameters are similar in size, where the hole has a smaller diameter than the fastener. With such interference-based fits (as opposed to clearance fits), high forces are required for installation. During the push-in method, the press 112 (such as a hydraulic press) pushes the fastener 114 into and through the hole 116 at a constant rate of speed. In contrast, during the rivet gun method, the rivet gun 108 (such as an air hammer) delivers multiple short impacts to the fastener 106 until fully secured within the hole 104. Both of these methods can be used at different stages of the design and production of aircraft. For example, the press 112 can optionally be used at the location 110, and the rivet gun 108 can optionally be used at the location 111. As noted, the push-in method is often utilized during the development stage at the location 111, as it is a repeatable and dependable process for reliable analysis. However, the rivet gun 108 is often used in actual production at the location 110, as it is more convenient and productive for technicians when installing large quantities of fasteners, and in spaces where a hydraulic press cannot fit. As described herein, the control unit 126 correlates the push-in method (as performed by the press 112) with the rivet gun method (as performed the rivet gun 108) so that the forces from the riveting process can be analyzed better, and to avoid over-stressing the components 102 and fasteners 106 at the location 110 during production.

In at least one example, the control unit 126 generates a predictive model that can foresee the forces on structures due to riveting for both of the insertion methods based on the diameter and length of the fasteners and holes, as well as the material of the components 102 (which is the same as that of the test piece 118). The predictive model can be generated by the control unit 126 through testing (such as by receiving data from the force sensors 120 and 140) and analysis of data received from the force sensors 120 and 140 to correlate the two different methods. In this manner, an improved understanding of what forces are experienced during development (push-in) and production (rivet gun) is gained, which allows development teams to clearly validate that structures fabricated in a controlled environment also behave similarly when fabricated in a factory setting.

Figure 3 illustrates a perspective top view of a force sensor 300, according to an example of the present disclosure. The force sensor 120 and the force sensor 140 shown in Figure 1 can be configured as the force sensor 300. In at least one example, the force sensor 300 is a load cell. As a non-limiting example, the force sensor 300 has a full scale of 1000 pound-force (lbf).

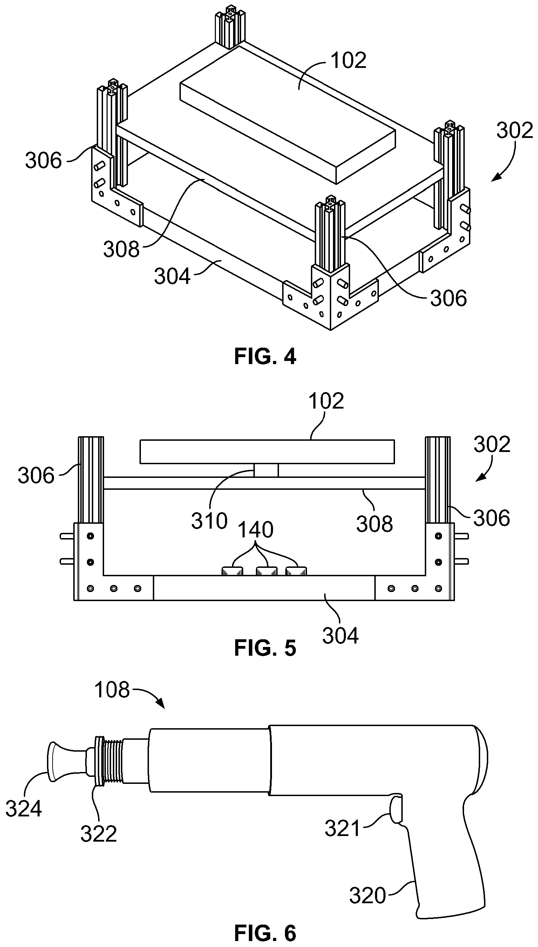

Figure 4 illustrates an isometric top view of a component 102 on a support platform 302, according to an example of the present disclosure. Figure 5 illustrates a side of the component 102 on the support platform 302. Referring to Figures 4 and 5, the support platform 302 includes a base 304. Columns 306 extend upwardly from the base 304, such as at corners. The columns 306 support a panel 308, which is spaced apart and above the base 304. A pedestal 310 disposes the component 102 above the panel 308. As shown, three force sensors 140 are mounted on the base 304 below the panel 308. Optionally, more or fewer force sensors 140 can be used. Also optionally, the force sensors 140 can be mounted on the panel 308. As another example, the force sensors 140 can be mounted directly on the component 102. Referring to Figures 1, 4, and 5, forces exerted by the rivet gun 108 during operation on the fastener 106 propagate through the support platform 302, and are measured by the force sensors 140.

Figure 6 illustrates a side view of a rivet gun 108, according to an example of the present disclosure. The rivet gun 108 includes a handle 320 connected to an operative portion 322, including a striker 324 configured to engage a fastener. The rivet gun 108 can be an air hammer. The rivet gun 108 is configured to be grasped by the handle 320, and a trigger 321 is pressed to operate the striker 324. Optionally, the rivet gun 108 can be configured to be automatically operated without human intervention. For example, a robot can include a rivet gun on an end effector.

Referring again to Figures 1 and 2, in at least one example, the force data 132 includes information regarding type of the test piece 118 and the component 102, thickness of the test piece 118 and the component 102, material of the test piece 118 and the component 102, number of layers (for example, stack) of the test piece 118 and the component 102, strength of the fasteners 106 and 114, material of the fasteners 106 and 114, number of holes 104 and 116, diameter of holes 104 and 116, diameter of fasteners 106 and 114, interference value, interference rate, and peak install force. In at least one example, the force data 132 includes such information for the push-in method (as performed by the press 112) and the rivet gun method (as performed by the rivet gun 108).

It has been found that for both the push-in method and the rivet gun method, fasteners (such as rivets) with higher interference fits correspondingly experience higher forces on structures. For the rivet gun 108, higher interference fits typically mean additional impacts from the rivet gun 108 to ensure the fastener is fully installed. In at least one example, the control unit 126 determines the energy required by each method to install different interference valued fasteners. The control unit 126 can produce force versus distance of fastener installation graphs, meaning that integrating and finding the area under these curves produces measurements of energy. As another example, the control unit 126 determines a numerical correlation between the push-in method and the rivet gun method by summing up an average impact force from the rivet gun 108 by multiplying the number of impacts by the average force per impact. In such scenario, the value can add up to a maximum peak force as found from the push-in method.

As another example, the control unit 126 correlates the push-in method with the rivet gun method by determining correlations between individual data for the push-in method and the rivet gun method. In this scenario, the control unit 126 determines that there are linear relationships between the interference and the forces experienced due to insertion, which are represented by linear equations in the form of y = mx +b, where y represents force and x represents the fastener interference. Following this form, linear relationship equations are developed for each interference level (low, intermediate, high, very high) on test pieces 118 for each of the push-in method and the rivet gun method. Additionally, a linear relationship between average force and number of impacts is created for the rivet gun method.

In at least one example, the predictive model is based on interpolation between multiple variables as a result from data collected from sensors detecting aspects (for example, number of impacts, rate of pressure, average magnitude of force, peak magnitude of force, and/or the like) of forces from the rivet gun 108 and the press 112. In this example, an individual can input parameters (such as via the input device 138) including material, bolt diameter, hole diameter, and the like, and the control unit 126 analyzes such parameters in relation to the predictive model, which interpolates such input parameters based on the force data 132, and outputs results which are then shown on the display 136.

In at least one example, the predictive model as used by the control unit 126 receives inputs of test piece material, test piece thickness, test piece stack count, fastener material, hole diameter, and fastener diameter. The control unit 126 then outputs (based on the database correlations) values for interference, interference rating, peak force from push-in, number of hits from rivet gun, average impact force, and maximum impact force. In this example, the control unit 126 analyzes the user inputs to determine which range of equations to use in order to provide the respective outputs.

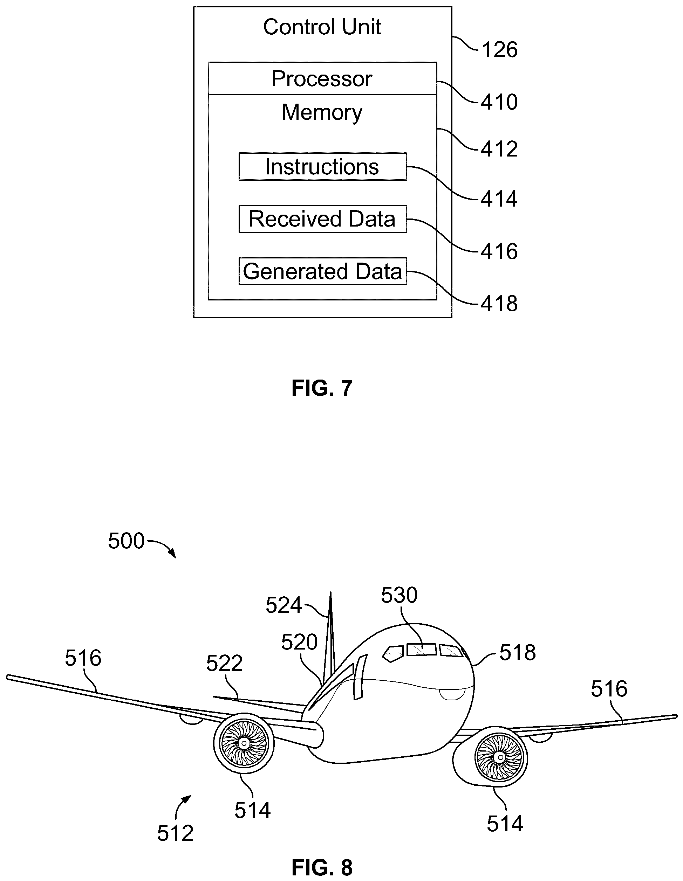

Figure 7 illustrates a schematic block diagram of the control unit 126, according to an example of the present disclosure. In at least one example, the control unit 126 includes at least one processor 410 in communication with a memory 412. The memory 412 stores instructions 414, received data 416, and generated data 418. The control unit 126 shown in Figure 7 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 126 may be or include one or more processors that are configured to control operation, as described herein.

The control unit 126 is configured to execute a set of instructions that are stored in one or more data storage units or elements (such as one or more memories), in order to process data. For example, the control unit 126 may include or be coupled to one or more memories. The data storage units may also store data or other information as desired or needed. The data storage units may be in the form of an information source or a physical memory element within a processing machine.

The set of instructions may include various commands that instruct the control unit 126 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 126. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 126 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 8 illustrates a perspective front view of the aircraft 500, according to an example of the present disclosure. The aircraft 500 includes various components, such as outer skin panels, frames, stringers, and the like, which can be secured together with fasteners, such as rivets. The aircraft 500 includes a propulsion system 512 that includes engines 514, for example. Optionally, the propulsion system 512 may include more engines 514 than shown. The engines 514 are carried by wings 516 of the aircraft 500. In other examples, the engines 514 may be carried by a fuselage 518 and/or an empennage 520. The empennage 520 may also support horizontal stabilizers 522 and a vertical stabilizer 524. The fuselage 518 of the aircraft 500 defines an internal cabin 530, which includes a flight deck or cockpit, one or more work sections (for example, galleys, personnel carry-on baggage areas, and the like), one or more passenger sections (for example, first class, business class, and coach sections), one or more lavatories, and/or the like. Figure 8 shows an example of an aircraft 500. It is to be understood that the aircraft 500 can be sized, shaped, and configured differently than shown in Figure 8.

Further, the disclosure comprises examples according to the following clauses:
Clause 1. A system comprising:
   a component formed of a material, wherein the component has one or more first holes;
   a test piece formed of the material, wherein the test piece has one or more second holes;
   a first tool configured to insert one or more first fasteners into one or both of the one or more first holes or the one or more second holes;
   a second tool configured to insert one or more second fasteners into one or both of the one or more first holes or the one or more second holes;
   one or more force sensors coupled to one or both of the component or the test piece, wherein the one or more force sensors are configured to detect (a) one or more first aspects of one or more first forces exerted during operation of the first tool to insert the one or more first fasteners into one or both of the one or more first holes or the one or more second holes, and (b) one or more second aspects of one or more second forces exerted during operation of the second tool to insert the one or more second fasteners into one or both of the one or more first holes or the one or more second holes; and
   a control unit in communication with the one or more force sensors, wherein the control unit is configured to correlate the one or more first aspects of the one or more first forces with the one or more second aspects of the one or more second forces.
Clause 2. The system of Clause 1, wherein the first tool is a different type than the second tool.
Clause 3. The system of Clauses 1 or 2, wherein the first tool is a rivet gun, and the second tool is a press.
Clause 4. The system of any of Clauses 1-3, wherein the first tool and the second tool are configured to operate in relation to the test piece.
Clause 5. The system of any of Clauses 1-4, wherein the first tool is configured to operate in relation to the component, and the second tool is configured to operate in relation to the test piece.
Clause 6. The system of Clause 5, wherein the first tool and the component are at a first location, and the second tool and the test piece are at a second location that differs from the first location.
Clause 7. The system of any of Clauses 1-6, wherein the one or more force sensors comprise:
   one or more first sensors coupled to the component; and
   one or more second sensors coupled to the test piece.
Clause 8. The system of any of Clauses 1-7, further comprising a user interface in communication with the control unit, wherein the user interface comprises a display, and wherein the control unit is configured to show information regarding the one or more first aspects of the one or more first forces and the one or more second aspects of the one or more second forces on the display.
Clause 9. The system of any of Clauses 1-8, wherein the control unit is configured to correlate the one or more first aspects of the one or more first forces with the one or more second aspects of the one or more second forces by using a predictive model.
Clause 10. The system of Clause 9, wherein the predictive model is based on a diameter of the one or more first fasteners or the one or more second fasteners, a length of the one or more first fasteners or the one or more second fasteners, a length and a diameter of the one or more first holes or the one or more second holes, and the material.
Clause 11. A method for a system comprising:
   a component formed of a material, wherein the component has one or more first holes;
   a test piece formed of the material, wherein the test piece has one or more second holes;
   a first tool;
   a second tool;
   one or more force sensors coupled to one or both of the component or the test piece;
      and
   a control unit in communication with the one or more force sensors,
   the method comprising:
      inserting, by the first tool, one or more first fasteners into one or both of the one or more first holes or the one or more second holes;
      inserting, by the second tool, one or more second fasteners into one or both of the one or more first holes or the one or more second holes;
      detecting, by the one or more force sensors, (a) one or more first aspects of one or more first forces exerted during operation of the first tool to insert the one or more first fasteners into one or both of the one or more first holes or the one or more second holes, and (b) one or more second aspects of one or more second forces exerted during operation of the second tool to insert the one or more second fasteners into one or both of the one or more first holes or the one or more second holes; and
      correlating, by the control unit, the one or more first aspects of the one or more first forces with the one or more second aspects of the one or more second forces.
Clause 12. The method of Clause 11, wherein the first tool is a different type than the second tool.
Clause 13. The method of Clauses 11 or 12, wherein the first tool is a rivet gun, and the second tool is a press.
Clause 14. The method of any of Clauses 11-13, wherein said inserting, by the first tool, and said inserting, by the second tool, are in relation to the test piece.
Clause 15. The method of any of Clauses 11-14, wherein said inserting, by the first tool, is in relation to the component, and said inserting, by the second tool, is in relation to the test piece.
Clause 16. The method of Clause 15, wherein the first tool and the components are at a first location, and the second tool and the test piece are at a second location that differs from the first location.
Clause 17. The method of any of Clauses 11-16, wherein the one or more force sensors comprise:
   one or more first sensors coupled to the component; and
   one or more second sensors coupled to the test piece.
Clause 18. The method of any of Clauses 11-17, further comprising showing, by the control unit on a display of a user interface, information regarding the one or more first aspects of the one or more first forces and the one or more second aspects of the one or more second forces on the display.
Clause 19. The method of any of Clauses 11-18, wherein said correlating comprises using, by the control unit, a predictive model.
Clause 20. The method of Clause 19, wherein the predictive model is based on a diameter of the one or more first fasteners or the one or more second fasteners, a length of the one or more first fasteners or the one or more second fasteners, a length and a diameter of the one or more first holes or the one or more second holes, and the material.

As described herein, examples of the present disclosure provide a system and a method for correlating forces exerted by a press with forces exerted by a rivet gun.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. **In** addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a component (102) formed of a material, wherein the component (102) has one or more first holes (104, 116);
a test piece (118) formed of the material, wherein the test piece (118) has one or more second holes (104, 116);
a first tool configured to insert one or more first fasteners (106, 114) into one or both of the one or more first holes (104, 116) or the one or more second holes (104, 116);
a second tool configured to insert one or more second fasteners (106, 114) into one or both of the one or more first holes (104, 116) or the one or more second holes (104, 116);
one or more force sensors (120) coupled to one or both of the component (102) or the test piece (118), wherein the one or more force sensors (120) are configured to detect (a) one or more first aspects of one or more first forces exerted during operation of the first tool to insert the one or more first fasteners (106, 114) into one or both of the one or more first holes (104, 116) or the one or more second holes (104, 116), and (b) one or more second aspects of one or more second forces exerted during operation of the second tool to insert the one or more second fasteners (106, 114) into one or both of the one or more first holes (104, 116) or the one or more second holes (104, 116); and
a control unit (126) in communication with the one or more force sensors (120), wherein the control unit (126) is configured to correlate the one or more first aspects of the one or more first forces with the one or more second aspects of the one or more second forces.

2. The system (100) of claim 1, wherein the first tool is a different type than the second tool; optionally, wherein the first tool is a rivet gun (108), and the second tool is a press (112).

3. The system (100) of claim 1 or 2, wherein the first tool and the second tool are configured to operate in relation to the test piece (118).

4. The system (100) of claim 1 or 2, wherein the first tool is configured to operate in relation to the component (102), and the second tool is configured to operate in relation to the test piece (118).

5. The system (100) of claim 4, wherein the first tool and the component (102) are at a first location (110), and the second tool and the test piece (118) are at a second location (111) that differs from the first location (110).

6. The system (100) of claim any one of claims 1-5, wherein the one or more force sensors (120) comprise:
one or more first sensors coupled to the component (102); and
one or more second sensors coupled to the test piece (118).

7. The system (100) of any one of claims 1-6, further comprising a user interface (134) in communication with the control unit (126), wherein the user interface (134) comprises a display (136), and wherein the control unit (126) is configured to show information regarding the one or more first aspects of the one or more first forces and the one or more second aspects of the one or more second forces on the display (136).

8. The system (100) of any one of claims 1-7, wherein the control unit (126) is configured to correlate the one or more first aspects of the one or more first forces with the one or more second aspects of the one or more second forces by using a predictive model; optionally, wherein the predictive model is based on a diameter of the one or more first fasteners (106, 114) or the one or more second fasteners (106, 114), a length of the one or more first fasteners (106, 114) or the one or more second fasteners (106, 114), a length and a diameter of the one or more first holes (104, 116) or the one or more second holes (104, 116), and the material.

9. A method for a system (100) comprising:
a component (102) formed of a material, wherein the component (102) has one or more first holes (104, 116);
a test piece (118) formed of the material, wherein the test piece (118) has one or more second holes (104, 116);
a first tool;
a second tool;
one or more force sensors (120) coupled to one or both of the component (102) or the test piece (118); and
a control unit (126) in communication with the one or more force sensors (120),
the method comprising:
inserting, by the first tool, one or more first fasteners (106, 114) into one or both of the one or more first holes (104, 116) or the one or more second holes (104, 116);
inserting, by the second tool, one or more second fasteners (106, 114) into one or both of the one or more first holes (104, 116) or the one or more second holes (104, 116);
detecting, by the one or more force sensors (120), (a) one or more first aspects of one or more first forces exerted during operation of the first tool to insert the one or more first fasteners (106, 114) into one or both of the one or more first holes (104, 116) or the one or more second holes (104, 116), and (b) one or more second aspects of one or more second forces exerted during operation of the second tool to insert the one or more second fasteners (106, 114) into one or both of the one or more first holes (104, 116) or the one or more second holes (104, 116); and
correlating, by the control unit (126), the one or more first aspects of the one or more first forces with the one or more second aspects of the one or more second forces.

10. The method of claim 9, wherein the first tool is a different type than the second tool; optionally, wherein the first tool is a rivet gun (108), and the second tool is a press (112).

11. The method of claim 9 or 10, wherein said inserting, by the first tool, and said inserting, by the second tool, are in relation to the test piece (118).

12. The method of claim 9 or 10, wherein said inserting, by the first tool, is in relation to the component (102), and said inserting, by the second tool, is in relation to the test piece (118); optionally, wherein the first tool and the component (102) are at a first location (110), and the second tool and the test piece (118) are at a second location (111) that differs from the first location (110).

13. The method of any one of claims 9-12, wherein the one or more force sensors (120) comprise:
one or more first sensors coupled to the component (102); and
one or more second sensors coupled to the test piece (118).

14. The method of any one of claims 9-13, further comprising showing, by the control unit (126) on a display (136) of a user interface (134), information regarding the one or more first aspects of the one or more first forces and the one or more second aspects of the one or more second forces on the display (136).

15. The method of any one of claims 9-14, wherein said correlating comprises using, by the control unit (126), a predictive model; optionally, wherein the predictive model is based on a diameter of the one or more first fasteners (106, 114) or the one or more second fasteners (106, 114), a length of the one or more first fasteners (106, 114) or the one or more second fasteners (106, 114), a length and a diameter of the one or more first holes (104, 116) or the one or more second holes (104, 116), and the material.
